# EUROPEAN PATENT SPECIFICATION

(11) **EP 4 305 608 B1**
(45) Date of publication and mention of the grant of the patent: **21.05.2025**
(21) Application number: 22719335.6
(22) Date of filing: 11.03.2022
(51) Int. Cl.: G07F 7/08, G07F 11/00, G06Q 20/20, G07F 9/00

(54) **STORAGE CABINET, METHODS AND USES THEREOF**
LAGERSCHRANK, VERFAHREN UND VERWENDUNGEN DAVON
ARMOIRE DE STOCKAGE, PROCÉDÉS ET UTILISATIONS DE CELLE-CI

(30) Priority: 11.03.2021 PT 2021117112
(43) Date of publication of application: 17.01.2024
(73) Proprietor: RK.AI-Serviços de Processamento de Images e Análise de Dados Lda., 4200-282 Porto (PT)
(72) Inventor: COELHO PINTO, Ana Alexandra, 4535-188 Mozelos VFR (PT); PEREIRA RIBEIRO, Paulo André, 4200-278 Porto (PT); TEIXEIRA NEVES PEREIRA FERNANDO, Carlos Miguel, 4150-042 Porto (PT); MONTEIRO RODRIGUES, Sérgio Lino, 4425-051 Maia (PT)
(74) Representative: Patentree
(86) International application number: PCT/IB2022/052218
(87) International publication number: WO 2022/190061

(56) References cited:
- WO-A2-2018/154411
- CN-A- 108 961 559
- US-A1- 2014 316 561

## Description

### TECHNICAL FIELD

The present disclosure relates to a storage cabinet, methods and uses thereof; namely to an automated micro-store equipment that provides a self-checkout cashier-less experience.

The equipment of the present disclosure comprises cabinets having moving shelves with inbuilt cameras and sensors, and a software APP, a router and network connections, allowing computer vision algorithms to identify all products and interactions, and customer selection of a given product.

The micro-store herein disclosed enables anyone to create a grab and go shopping experience. When a customer reaches the micro-store, he unlocks it by using the designed APP, selects the desired product, picks it, and he is ready to go and pay. As soon as the customer closes the door, he receives a receipt in seconds with the products that he purchased.

The micro-store of the present disclosure can operate anywhere just requires an electrical outlet and an internet connection. The user experience is similar to any retail store: the user picks products and can return them if he doesn't like them. The micro-store could operate 24/7 without any human intervention.

### BACKGROUND

In the recent past, the field of unattended micro-markets and grab and go experiences gained a lot of attention.

Typically, these micro-markets are operated within a company's break room and offer food and beverages using an honour system: a payment system that relies solely on trust and honesty. An example is a system comprising a cardboard containing a variety of snacks and labels for their respective prices, as well as an unsecured coin box built into the cardboard frame. This system expects for the user to take whatever he wants from the box, trusting that they will deposit the correct amount of money in the coin slot.

Opposed to honour systems, vending machines are closed systems that allow the user to receive a product once he has paid for it. In most of these systems, consumers can't interact with items; both in traditional and old-fashioned vending machines, products are removed without direct interaction with them.

These devices have gained a bad reputation because they provide a poor user experience and usually an unhealthy selection of snacks and beverages, even requiring most of the time physical money to operate.

Furthermore, the vending machine, in most cases, is not appealing and does not have an attractive appearance.

To solve this problem some companies start creating solutions using RFID technology. These devices often require "smart tags" to identify the removed products and enable the user to open the machine and pick-up products. However, sometimes these tags cannot work properly, and the owner loses a sale.

Additionally, said devices have some operational problems, wherein each product needs to be tagged, thus increasing product and operational costs.

Document US6575363B1 discloses a vending machine that can dispense an item at multiple price points and a method for enticing a further sale at one or more vending machines.
Document US 2014/316561 discloses a vending machine including a locking mechanism, a door sensor, a housing, a display arranged within the housing to display pricing information for products within the kiosk and a cashless payment collection module coupled to the vending machine.

To push this market to a better experience and a healthier approach some companies start deploying open shelves where consumers can pick-up the chosen items. However, those need to scan the barcodes of each item, thus must have a barcode-scanner located near the shelves and products. Such open shelf micro-market experiences are limited to only highly secured locations and are subject to losses due to theft.

Another problem of these systems and traditional vending machines is that there is no real time communication between the consumer and the operator of the system.

Accordingly, there is a continuing need for automated checkout experiences with "off the shelf" selling methods and systems, which are appealing and attractive, and offer a wide range of products.

Further, it is also needed that such automated systems can be deployed anywhere and can offer a wide range of high demand products, food, beverages, and other essentials.

The present disclosure fulfils these needs and provides other related advantages.

### GENERAL DESCRIPTION

The present disclosure relates to an automated micro-store equipment comprising at least a closed cabinet with inbuilt cameras and sensors, and an individual software application that allow computer vision algorithms to identify all products and interactions available to the user by a given provider therefore, enabling the customer to perform a self-checkout cashier-less acquisition.

The customer reaches the micro-store by using a mobile application, or a Point of Sale (POS) terminal, and picking-up the desired products. As soon as the customer closes the door, he receives a receipt in seconds with the products that he purchased.

The user's experience is similar to any retail store: the user picks products and can return them if he doesn't like them. The micro store could operate 24/7 without any human intervention.

This disclosure relates to an equipment and, albeit control of access to said equipment is done via mobile application, the product selection by the user is done in the physical world by manually removing products from inside a cabinet.

An aspect of the present disclosure relates to a storage cabinet comprising one or more shelves, one or more doors for enclosing the cabinet, and an electromagnetic lock for locking the door or doors;
wherein each of said shelves comprises one or more cameras, an opened or closed door state sensor, and a weight sensor arranged to measure weight of products placed on each of said one or more shelves;
further comprising a cabinet electronic data processor configured for carrying out a machine learning computer vision method for processing data received from cameras and sensors to identify products removed from said one or more shelves, wherein the cabinet electronic data processor is further configured for:
   when detecting the cabinet door or doors being in an open state, acquiring image data from the camera or cameras and weight sensor data;
   when detecting a weight change at a shelf, processing image data acquired including when the weight change occurred, with said machine learning computer vision method.

In an embodiment, the cabinet electronic data processor is further configured for, as preceding steps, receiving a valid user authorisation and unlocking the electromagnetic lock.

In an embodiment, the cabinet electronic data processor is further configured for, after unlocking the electromagnetic lock, when detecting cabinet door or doors being in an open state, locking the electromagnetic lock such that when the door or doors are closed, the door or doors will be locked.

In an embodiment, the cabinet electronic data processor is further configured for refusing subsequent user authorisations until a previous user has closed the door or doors.

In an embodiment, the cabinet electronic data processor is further configured for sending a list of products identified as removed from said one or more shelves between receiving a valid user authorisation and receiving door state sensor data indicating the door or doors as closed.

In an embodiment, the cabinet electronic data processor is further configured for comparing weight data before a product is removed from a shelf, with weight data and after a product is returned to a shelf, and triggering an action should a weight difference exceeding a predetermined threshold is detected.

In an embodiment, the storage cabinet may comprise a peripheral controller configured for receiving data from the camera or cameras, the weight sensor and from the shelf data processor or processors, and configured for controlling the electromagnetic locker.

In an embodiment, the cabinet electronic data processor is further configured for carrying out a machine learning computer vision method for processing data received from cameras comprising a first machine learning computer vision model trained for classifying a product handling event as a product pickup or product return and a second machine learning computer vision model trained for identifying the product being handled in said product handling event.

In an embodiment, the machine learning computer vision method comprises the use of a Convolutional Neural Network, CNN.

In an embodiment, the cabinet electronic data processor comprises a wireless connection for communicating with the shelf data processor or processors.

In an embodiment, the cabinet electronic data processor comprises a wireless connection for communicating with a user's mobile device, this connection is optional. If the user doesn't connect using a mobile device, he still can use the cabinet using a POS terminal.

In an embodiment, each of said shelves comprises a shelf electronic data processor connected to the electromagnetic locker, the one or more cameras and the weight sensor, and comprising a wireless connection.

In an embodiment, the storage cabinet of the present disclosure can be an autonomous cabinet for use in cashier-less purchases.

In an embodiment, the shelves are movable within the cabinet, in particular, vertically movable.

In an embodiment, the cabinet electronic data processor is connected to a remote server, i.e. a cloud server, configured for carrying out a machine learning computer vision method for processing image data as a redundant processing to that of the cabinet electronic data processor.

In an embodiment, the storage cabinet of the present disclosure may further comprise a visual identification code attached to the exterior of the cabinet for scanning by a user's mobile device.

In an embodiment, the visual identification code is a 1D bar code or 2D bar code, in particular a QR code.

In an embodiment, the storage cabinet of the present disclosure may further comprise a radio-frequency identification, RFID, tag attached to the exterior of the cabinet for scanning by a user's mobile device, in particular the RFID tag being a near field communication, NFC, tag.

In an embodiment, each of the shelf or shelves comprises a hollow interior defined by a top cover and a bottom part.

In an embodiment, the top cover of the shelf is supported solely by a weight sensor arranged on the bottom part of the shelf, for measuring the weight of products placed on top of the shelf, in particular the weight sensor comprising two or more load cells.

In an embodiment, the bottom part of the shelf comprises at least one downward-looking camera arranged on the underside of the shelf.

In an embodiment, a bottom part of the shelf has a "U" cross-sectional profile defining side surfaces of the bottom part.

In an embodiment, a top cover of the shelf is a flat surface configured to move vertically without touching the sides of the bottom part of the shelf.

In an embodiment, the door or doors are sliding doors, folding doors, hinged doors, or combinations thereof.

In an embodiment, the product is a good, preferably a food or a beverage item, among others, more preferably a packaged food or beverage item.

In an embodiment, the cabinet is a refrigerated or heated cabinet.

In an embodiment, the camera or cameras are wide angle lensed cameras.

In an embodiment, the camera or cameras are fixed to an underside of each shelf, arranged on a front edge of said shelf, and directed towards another shelf immediately below, in particular the camera being arranged on the centre of each shelf front edge or the cameras being distributed along each shelf front edge, further in particular the cameras being distributed along each shelf front edge and in a central region of the shelf front edge.

Another aspect of the present disclosure relates to a method for operating a storage cabinet comprising one or more shelves, one or more doors for enclosing the cabinet, and an electromagnetic lock for locking the door or doors; wherein each of said shelves comprises one or more cameras, an opened or closed door state sensor, and a weight sensor arranged to measure weight of products placed on each of said one or more shelves; further comprising a cabinet electronic data processor configured for carrying out a machine learning computer vision method for processing data received from cameras and sensors to identify products removed from said one or more shelves, wherein the method comprises using said cabinet electronic data processor for: when detecting the cabinet door or doors being in an open state, acquiring image data from the camera or cameras and weight sensor data; when detecting a weight change at a shelf, processing image data acquired including when the weight change occurred, with said machine learning computer vision method.

In an embodiment, the method of the present disclosure comprises the cabinet electronic data processor, as preceding steps, receiving a valid user authorisation and unlocking the electromagnetic lock.

In an embodiment, the cabinet electronic data processor, after unlocking the electromagnetic lock, when detecting cabinet door or doors being in an open state, locking the electromagnetic lock such that when the door or doors are closed, the door or doors will be locked.

An embodiment comprises the cabinet electronic data processor refusing subsequent user authorizations until a previous user has closed the door or doors.

An embodiment comprises the cabinet electronic data processor sending a list of products identified as removed from said one or more shelves between receiving a valid user authorisation and receiving door state sensor data indicating the door or doors as closed.

### BRIEF DESCRIPTION OF THE FIGURES

The following figures provide preferred embodiments for illustrating the disclosure and should not be seen as limiting the scope of invention.
Figure 1 shows a front perspective view of an automated cabinet, wherein:
   1. Represents the electromagnetic lock
   2. Represents the peripheral controller
   3. Represents the power supply
   4. Represents the machine identifier
   The connection between components 1 and 3 represents the power supply lines that go through the cabinet.
**Figure 2** is a view of the cabinet without the doors with cameras and embedded computers positioned, wherein:
   5. Represents the cabinet's shelves
   6. Represents the cameras
   7. Represents the Al and computer vision processing board
**Figure 3** is a view of a specific shelf with cameras and vision areas, wherein:
   8. Represents a top shelf
   9. Represents a bottom shelf
   10. Represents the camera's vision area
**Figure 4** is a perspective of the shelf with sensors inside, wherein:
   11. Represents the body of a shelf
   12. Represents the top cover of a shelf
   13. Represents the sensor combining PCB
   14. Represents weight sensor load cells
**Figure 5** is a hardware architecture of the sensors and all the embedded computers, wherein:
   15. Represents power supply lines
   16. Represents a Router and a 4G/5G network connection

   A. Represents a Wi-Fi Network
   The line connecting A to 6 and 13 represents a wireless connection between these components. Both the Cameras (6) and Sensor Conditioning Electronics (13) are connected to the Wi-Fi network created by the Router (16).

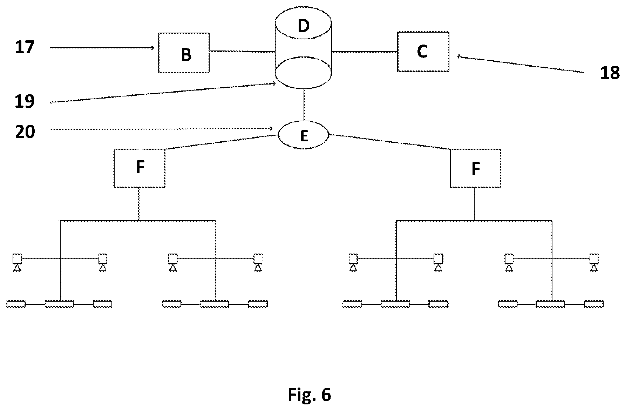

**Figure 6** is communication between the cabinet and the cloud software, wherein:
   B. Represents a front-end access,
   C. Represents the Al Models,
   D. Represents a database,
   E. Represents a cloud server,
   F. Represents the lock controller and the Al / Computer Vision detection.
   Figure 6 shows how several cabinet units (each F component) connect to the same cloud server, which in turn has a single database for all cabinets. This database is then exposed via a "back office" front-end for user access and control.

### DETAILED DESCRIPTION

An aspect of the present disclosure relates to a storage cabinet comprising one or more shelves, one or more doors for enclosing the cabinet, and an electromagnetic lock for locking the door or doors; wherein each of said shelves comprises one or more cameras, an opened or closed door state sensor, and a weight sensor arranged to measure weight of products placed on each of said one or more shelves; further comprising a cabinet electronic data processor configured for carrying out a machine learning computer vision method for processing data received from cameras and sensors to identify products removed from said one or more shelves, wherein the cabinet electronic data processor is further configured for: when detecting the cabinet door or doors being in an open state, acquiring image data from the camera or cameras and weight sensor data; when detecting a weight change at a shelf, processing image data acquired including when the weight change occurred, with said machine learning computer vision method.

The present disclosure also relates to a method for operating a storage cabinet of the present disclosure.

The present disclosure relates to an automated micro-store equipment comprising at least a cabinet with inbuilt cameras and sensors, a designed software application (APP) that allow computer vision (CV) algorithms to identify all products and interactions available to the user by a given provider therefore, enabling the customer to select one or several desired products, and to perform a self-checkout cashier-less acquisition.

The present disclosure is also directed to a method for selling items from sensor fusion controlled automated cabinets comprising automated micro-store equipment of the invention.

In an embodiment, the automated micro-store equipment comprises at least one cabinet having inbuilt cameras and sensors. Each cabinet is operated by using a mobile application whereby the customer identifies himself, adds payment methods and directly contacts an operator.

In an embodiment, the computer vision algorithms identify all products on the cabinet and customer's interactions such as selecting one or more products displayed therein.

In an embodiment, when it is necessary to compute Machine Learning or Al algorithms, a special processor capable of processing large amounts of information is required. This information is usually organized in matrices of values that serve as input to mathematical algorithms that, using this information, learn to classify the input information. As in the cabinet there is this need, it was designed an Al/CV Computer capable of dealing with data with these characteristics.

In an embodiment, in the case of the cabinet, it is based on an area of ML called Computer Vision (CV). Computer vision is the science and technology of machines that are able to learn visual information. This technology is capable of obtaining visual information and multidimensional data, or matrices. This area of technology is applied in a wide variety of applications, from object modelling, industrial process control, and autonomous cars. In this case, it is applied for human activity recognition. It is capable of being able to identify with great precision which product(s)/object(s) interacted with by a user.

The present disclosure is intended to sell products in an unattended way. Whenever a user activates the equipment for purchase, training or replenish, the algorithms are launched being like the start of an engine, all cameras stay in active mode and whenever they detect interaction, they save data as a Key Event. Later on, this data is used to feed the algorithm that classifies the interaction as a pickup or drop of a product, after this classification it enters a second layer that identifies the product(s) that have been picked up. This visual identification uses Convolutional Neural Networks (CNN) also known as Shift Invariant or Space Invariant Artificial Neural Networks. They are typically used quite frequently and successfully in image processing and analysis. These neural networks, inspired by the visual cortex of animals, have the ability to learn from the filters that intrinsically compose it, something that in other algorithms would have to be implemented manually and where automatic adjustment does not occur as it does in this type of network. A CNN is able to successfully capture spatial and temporal dependencies in an image by applying relevant filters. The architecture performs a better fit to the image dataset due to the reduction in the number of parameters involved and reuse of weights. In other words, the network can be trained to better understand all the information in the image.

With all these strengths a network is designed that is able to identify the type of interaction and having that information then move on to product/product recognition.

In an embodiment, the disclosure also has continual learning capability. Continual Learning is the ability of a model to learn continuously from a stream of data. In practice, this means supporting a model's ability to learn and adapt autonomously in use as new data arrives. This process is made possible by the training functionality that cabinet provides. Since when a new product is created the machine learns its characteristics, in use/sales when an interaction is classified it is fed back into the learning cycle so that it learns over time and its accuracy tends to 100%. With this modality it is possible to achieve 99.9% accuracy values in use.

In an embodiment, these algorithms are active whenever the equipment is in use (purchase, train, replenish) causing the data to be captured and this process continues to improve.

In an embodiment, by default, the cabinet is locked and only unlocks when a user uses the application, or a POS terminal, to start shopping, or the operator unlocks it to replenish.

In an embodiment, all the products are placed on top of the shelf like in retail stores and all the essential sensors, such as weight sensors, and cameras are built inside each shelf of each cabinet.

In an embodiment, to operate the cabinet, customers need to be registered on the APP and have at least one credit card associated with their account.

In an embodiment, after having logged-in, customers need to insert the cabinet code or scan the cabinet QR code to start the purchase. Purchasing items is really simple: the customer just picks up whichever product he wants, each interaction adds or removes items from a virtual cart and when he closes the doors the virtual cart is processed, and the payment is done.

Therefore, the present disclosure relates to a system providing unattended grab and go, automated checkout micro-stores for use in distributing products and items to customers, thus defining a micro-store.

In an embodiment, each micro-store is designed to be fully automated and unattended grab & go experience. However, the system provides interactive live solutions, allowing customers to interactively communicate with customer service agents and management via email or SMS through the mobile app.

The present disclosure is also related to providing a better security than currently provided by the present company's micro-market, along with greater flexibility and more product availability than that offered by conventional vending machines, while the transactions are still conducted without any need for attended personnel.

In an embodiment, the automated micro-store equipment is characterized by comprising several closed cabinets units having each one of them moving shelves (5) with inbuilt cameras (6) and weight sensors (14), an individual identification code (4), doors with electromagnetic lockers (1), a peripheral controller (2) with artificial intelligence (AI) and a computer vision (CV) processing board (7), a designated router (16), 4G/5G and wireless network connections, (or Wi-Fi), a database, and a cloud server, said equipment is able to interact with a mobile device of a certified customer having previously installed a designed software application (APP), wherein:
a wireless Network (or Wi-fi) (A) is connected to the cameras (6) and to the sensor conditioning PCB (13), and both cameras (6) and said sensor conditioning PCB (13) are connected to a private-customer wireless network (or Wi-fi) (A) created by the router (16), several cabinet units are connected to the same cloud server (E), which has a single database (D) for all cabinets, and when said database (D) is exposed via a "back-office" web that enables a given user to have control of one or several equipments, products sold in said equipments, hardware status of cabinet parts and cabinet stock management,
the Artificial Intelligence and computer vision processing board (7) comprise computer vision algorithms that run locally on said Al processing board (7), enabling to identify the products that are selected and removed from a given cabinet and shelf (5), allowing to create a virtual cart for the customer and, at the end of the shopping experience, to process all the shopping information to create a bill to a given user for the removed products,
the central cloud (E) is connected to all the cabinets, to the database (D) loaded with customer, and product information.

In an embodiment, the disclosed automated micro-store equipment is further characterized by each shelf (5) comprises a designated anti-fraud system comprising two weight sensors (14) that validate if the package was not violated through a weight verification, said sensors being placed inside each shelf body (11) with the top cover of the shelf (12) placed on top of the sensors, which are connected to a sensor conditioning PCB (13), wherein the weight measurement is performed by reading the data of weight sensors (14).

In an embodiment, the automated micro-store equipment is further characterized by the "back-office" web comprises 9 staff specific pages that allow cabinet owners to check each cabinet status, see customer preferences, check cabinet stock in real time and dynamically change prices.

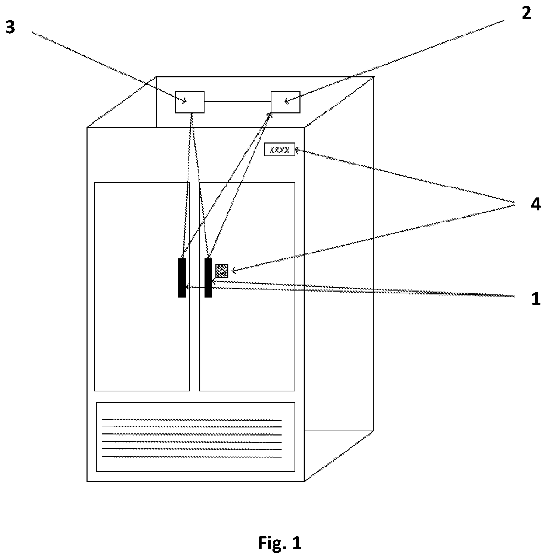

In an embodiment, with reference to figure 1, an exemplary automated grab and go cabinet is shown. The cabinet is an unattended, automated grab and go micro-store that can be used for the sale of all kinds of food and beverages items, preferably packaged, as well as any kind of other consumable items that might be necessary in everyday life.

In an embodiment, figure 1 shows an electromagnetic door lock (1) to ensure that all the items are protected and to avoid product violation. The door locks are controlled by a peripheral controller (2) that is placed in a working area on top of the cabinet, this controller knows the door state and is able to understand if it is open or closed. In the working area on top of the cabinet is also where the power supply (3) is located, which powers the electromagnetic door locks and the peripheral controller.

In an embodiment, each cabinet has its own code (4), preferably a QR code (4) (Quick Response code). This is a type of matrix barcode or two-dimensional barcode. In the scope of the present invention, the barcode is a machine-readable optical label that contains information about the item to which it is attached. Opening the cabinet by the customer is done by inserting the above-mentioned code or by scanning the respective QR code with the application previously installed in the customer's mobile device.

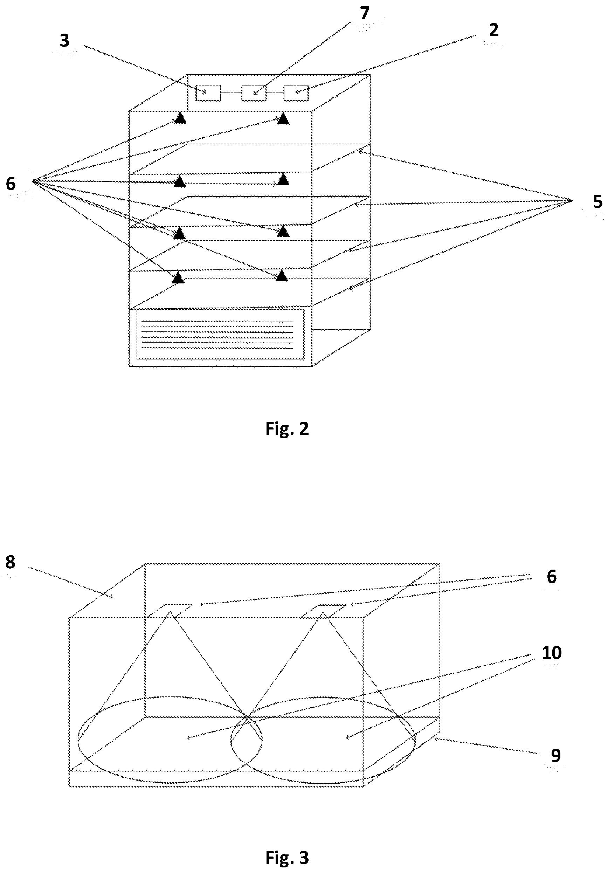

In an embodiment, figure 2 presents a view of the cabinet without doors with indication of the position of the cameras (6) and shelves (5). The Artificial Intelligence and computer vision processing board (7) is placed on top of the cabinet near the peripheral controller (2) and the power supply (3). When a user interacts with the cabinet the interacted products are identified by computer vision algorithms that run locally on the Al processing board (7). These algorithms are able to know what is picked up and what is dropped down inside the cabinet with a high accuracy. That kind of knowledge allows the creation of a virtual cart for the customer and, at the end of the shopping, process this information to bill the user for the removed products.

In an embodiment, with reference to figure 3, the image shows a focus on a shelf, identifying cameras (6) and vision areas (10). In this figure we can see the cameras (6) on the bottom side of the top of the shelf (8). Each camera has a specific vision area (10) of the bottom shelf (9). When a customer picks an item from the bottom shelf, the camera that has vision of this interaction and is recording that particular vision area sends information to the Al processing unit for it to identify what was picked or dropped from the shelf using the recorded images of the interaction.

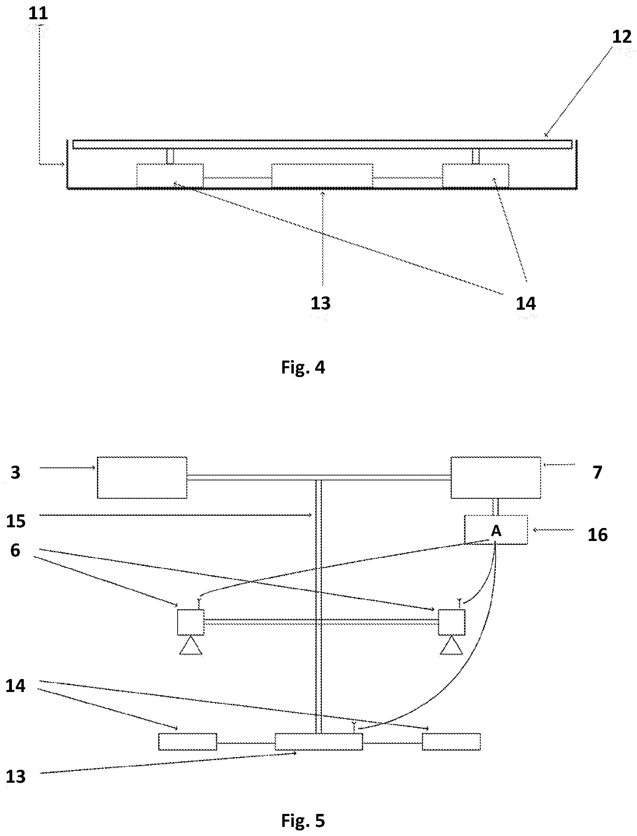

In an embodiment, figure 4 represents a perspective of the shelf with sensors inside. The described system has some redundancy checks to avoid fraud. To do that, each shelf has two weight sensors / load cells (14) that validate if the package was not violated through a weight verification. These sensors are placed inside the shelf body (11) with the top cover of the shelf (12) placed on top of the sensors. To process the weight measurements, we have a sensor combining PCB (13) that connects to both load cells (14) and is able to read their data.

In an embodiment, figure 5 shows the hardware architecture of the sensors and all the embedded computers. The system communications are made through a wireless connection. A private wireless (or Wi-fi) network is created in place by the wireless (or Wi-fi) router (16). The Al processing board (7), the sensor conditioning PCB, Printed Circuit Board (13), that reads information from the load cells (14) and the cameras (6) are connected to the private wireless (or Wi-fi) network. All the sensors and cameras are connected to the power supply lanes (15) placed on the centre of the cabinet and these lanes are connected to the power supply (3) that also supplies the Al processing board (7) and the wireless (or Wi-fi) router (16) with power.

In an embodiment, the power supply comprises an electrical apparatus of the type of Uninterruptible Power Supply (UPS) that provides emergency power to the cabinet when the input power source fails.

In an embodiment, figure 6 represents the software connection architecture. This system is able to connect to a central cloud (E) that has a database (D), dense Al neural network (C) and a web back office (B). The central cloud (E) can be connected to by all the cabinets, the database (D) stores customers information and product information. The web back office allows cabinet owners to check cabinet status, see customer preferences, check cabinet stock in real time and dynamically change prices. The Dense Al neural network (C) is another redundancy of the system that is only used if the local AI processing board cannot identify the interacted product.

In the scope of the present invention, the following definitions are used.

In an embodiment, the web Back Office is a web-based cabinet administration and management tool, that allows control of one or several equipment or products sold in said equipment, hardware status of cabinet parts and cabinet stock management. The Back Office may be divided in 12 sections and access to each section can be conditioned depending on the accessing user's role (Administrator, Manager or Basic User).

In an embodiment, a product section contains information regarding the products that are associated with a given cabinet unit, allowing the creation of new products, training newly created products, enabling or disabling a given product from the cabinet, altering a given product property, delete products, and check the product stock by shelf.

In an embodiment, a section that lists all the products associated with the cabinet (Product Listing), basic information about them (Name, brand, a picture of the product, weight, price, product location, etc...) as well as a series of controls that directly affect the product: delete, edit and a toggle switch for activating or inactivating a product (if inactive, the product cannot be sold and is not part of the products the cabinet is currently working with).

In an embodiment, delete removes the product from the cabinet. - Edit allows a manager to access the product's properties and alter them to the desired ones.

In an embodiment, the product creation sections allow the creation or association of products with the current cabinet. In a first stage, it shows a list of products that already exist in the cloud, created by the organization (an entity or company that manages any group of cabinets or a single cabinet) to which the cabinet belongs. Selecting one of these products allows for quick association of it with the cabinet.

In an embodiment, if the product has not been created previously by any of the organisation's managers, it has to be created via a button on top of the page ("Create New").

The user is presented with a form that has to be filled with the product's data, price and, optionally, also the location inside the cabinet. Once this is done and the information is saved, the product cannot yet be activated to be sold as it needs to be trained, and it shows in the product list with a "Train Product" button on it.

In an embodiment, a list of cards is presented in this page, each card representing a shelf inside the cabinet (Stock by Shelf). Inside each card, the user can see a list of products that are placed in the shelf along with a status indicator for the product (red if stock is under 30%, yellow if under 70% and green if stock is greater or equal to 70%), the number of items of that product that are placed in the shelf, the maximum capacity for that product in the shelf and a list of rows where the product is currently placed in.

In an embodiment, the customer carts section presents the user with a list of all the purchases processed by the cabinet and their basic information (number of products bought, value of purchase, purchase duration and date). By clicking on the button in each purchase, the user can view the purchase in detail.

The detailed view shows a list of products bought with basic information (product image and name), the amount bought, unit price and total price (unit price x amount bought) for the product. Below this, a total value of the purchase is also presented.

In an embodiment, the shop section, similar to the Customer Carts section, provides a list of purchases processed by the cabinet in much more detail. The listing is identical, also showing the number of products the customer interacted with during a purchase, as well as a warning indicator for each session. This indicator can show a variety of information, such as "Open Session" if the purchase is still in progress, "Validation" if an error occurred during the purchase, "Reopened" if the session has been manually reopened by a manager for a receipt correction, "Re-issued Receipt" if the receipt has been altered by a manager, "Door open for too long" if the customer forgot to close the door after the purchase, and several other important messages for the staff team to properly analyse a session.

In an embodiment, by clicking the button on the session, it opens a detailed view, which has two similar sections: a list of removed or returned products, chronologically sorted, showing where each product was removed from; a chronological timeline of events, showing cards for each interaction and the products contained in it, as well as door opening and closing time.

In an embodiment, the page updates itself in real time, while the cabinet is in operation, so if a staff member wants to observe a session while it is happening, they can click the session to access it and monitories what is happening in real time.

In an embodiment, the timeline has a dropdown list allowing the staff to access images of the before and after of each interaction, as well as the possibility to edit the interactions.

In an embodiment, the session of editing or adding interactions may need validation by a staff member or the session has been reopened for correction by one, managers have the ability to alter a purchase. Each interaction card on the timeline allows edition, presenting the manager with the option to alter a product quantity in the interaction, remove it completely or add a different product and quantity.

In an embodiment, on the bottom of the interaction timeline, a "+" (plus) symbol is also visible which, when clicked, allows adding new interactions to the timeline. Interactions may contain several products and each product's quantity can be designated.

In an embodiment, the replenish may be similar to the shop section, this page provides a list of replenish sessions, displaying the number of products removed and added to the cabinet, the session duration, and the date it occurred on.

In an embodiment, clicking on a session's button shows a page identical to the one of the shop session details, with a list of products the staff member has removed or placed inside the cabinet in a chronological order, as well as an aggregate list of all the products with the respective altered quantities.

In an embodiment, the product training screen shows all the products that have been created but not trained yet, in cards. Each card shows the basic information of the product along with a button to either start or continue the product training. Clicking the "Train Product" button in any product that needs to be trained opens the training screen, which is a session screen with a progress bar.

In an embodiment, the product training screen allows the Manager to gather a dataset of images of the product through sequentially placing the product in a shelf and removing it from the shelf afterwards.

In an embodiment, the user also sees a list of images being gathered, bellow the progress bar, each having a small "x" (cross) button on the top left corner designed to remove bad dataset from the training session. Clicking the button removes the image and also decreases the training progress.

In an embodiment, the hardware page allows the staff to access a listing of all the cameras and weight sensor load cells inside the cabinet, making it possible to view their current status (online / offline), when their status was last checked and if there are any issues concerning each equipment.

In an embodiment, it also lists the internal network addresses where each device hosts its services, for technical debugging.

In an embodiment, the reporting section is divided in three types of reports: Sales, Stock and Revenue, namely:
Sales: By selecting a date range on top of the page, the user is presented with a list of the products sold during the two dates and the amount of each product sold.
Stock: The stock report requires the user to select both a date range and a product. Once selected, it shows a graph, representing the stock changes during the selected date range.
Revenue: The revenue report is similar to the sales report, but it also provides the total monetary value corresponding to each product sold. As the prices may change for any given product throughout time, each product's row can be expanded by clicking an arrow symbol on the left side, showing the various prices for a product and the number of items sold at that price, which break down the total value of sold product in a series of different prices.

In an embodiment, the ticketing page allows the staff in charge of the cabinet to manage customer tickets (issues and questions).

In an embodiment, through the mobile application, the users can submit general questions or flag an issue with one of their purchases.

In an embodiment, those tickets are listed here, in a way that shows the date of the ticket, its severity in a scale of 1 to 5 with 5 being the most critical, the ticket status: Open, In Resolution or Closed and the staff member to whom the ticket is assigned, if any.

In an embodiment, a machine learning algorithm retrieves/extracts information and classifies the severity of the customer's ticket.

In an embodiment, staff members can, in this screen, press a button on any unassigned tickets to assign the ticket to themselves, thus becoming responsible for its resolution.

In an embodiment, opening a ticket for details provides a chat-style window where the staff member can see the original ticket message submitted by the customer, and all the messages exchanged afterwards. Under this window there is a box where the staff member can quickly respond to the ticket conversation.

In an embodiment, there are also buttons to set a new status for the ticket, change its severity and alter to whom the ticket is assigned.

In an embodiment, the control section of the cabinet is reserved for Administrator access, and it allows control of the cabinet hardware and status.

In an embodiment, in the control section the Administrator can manually enable or disable the electromagnetic door locks, close a session that is currently in progress, open a new shop or replenish session, mark all sessions as requiring staff verification and manually alter the logical (software) status of the cabinet either using a series of predefined status buttons (Ready for operation, in operation, etc..) or any custom status.

### Example 1 - Description of Model 1

In an embodiment, the system consists of a physical cabinet, which can operate in refrigerated, hot or neutral modes, that contains several movable shelves (5) inside, each shelf (5) being able to detect weight and capture images.

The cabinet has a sticker with a unique code inscribed, as well as a QR code (4) with the same identification.

In an embodiment, on the top of the cabinet there are a series of components:
Power supply unit (3): this provides power to all components on the top of the cabinet as connects to power lines that go through the cabinet and thus powers each shelf (5) component (cameras (6) and load cells (14)),
Al / Computer Vision processing board (7): A dedicated board for computer vision algorithms that identify the products that have been picked up or dropped/returned to the cabinet,
Peripheral controller (2): consists of a single-board computer that controls the electromagnetic lock (1) of the cabinet door, receives weight values from all the shelves (5) in the cabinet as well as the images from all the cameras (6) in the shelves,
wireless (or Wi-fi) Router (with a 4G/5G connection) (16): the wireless (or Wi-fi) router spawns a private wireless (or Wi-fi) connection (a) to which all the peripherals connect to, along with the peripheral controller (2) and the Al / CV processing board (7). All communications between devices are made through this private network.

The regular cabinet has two tempered glass doors with metal handles and a metal backplate on the inner side of the glass. Inside the cabinet there is a column exactly in the middle, where both doors touch when they close. This column contains two electromagnetic locks (1).

The electromagnetic locks (1) default to the "On" position, meaning that they are always triggered thus keeping both doors closed, by attracting the metal backplate in each door.

The peripheral controller (2) is equipped with two relays, which give it the ability to individually control each door by turning the relay on or off. The electromagnetic door locks (1) also provide an electrical signal that allows the peripheral controller (2) to know if they are on or off.

The shelves (5) are composed of two main parts: the shelf itself (11), with a hollow interior allowing components to be placed inside, and a top cover (12), which is a reinforced place that goes on top of it. This is necessary to be able to measure weight on the shelf (5), as both pieces never touch each other except through two load cells (14) inside the bottom shelf hollow section, which hold the top cover (12) and are supported by the bottom part of the shelf (11) (figure 4).

Inside each shelf (5) there are two load cells (14), equally distant from the middle, horizontally aligned. They are bolted down to a "H" shaped structure in the bottom part of the shelf (11), giving them a small height from the bottom. In the middle of both load cells there is a sensor conditioning PCB (13), custom designed to be able to read data from both load cells (14) at the same time and with a series of calibration and fine-tuning capabilities to ensure the weight values are accurate.

In an embodiment, the top cover (12) is then placed on top and bolted down to the load cells (14), having only those as support to it. This means that any weight placed on top of the shelf directly affects the load cells (14) beneath and translate into a weight value that the sensor conditioning PCB (13) reads.

In an embodiment, the sensor conditioning PCB (13) is connected to the above-mentioned wireless network (A) and able to communicate with all devices.

In an embodiment, there are two cameras (6) in the bottom front side of each shelf (5) (the side furthest from the back of the cabinet and closest to the doors), equally distant from the centre. These cameras (6) are small camera modules with wide angle lenses, equipped with wireless connectivity. They connect and communicate through the wireless (or Wi-fi) network (A) all the devices are connected to.

In an embodiment, the cameras (6) are on the bottom side of the shelves (5) which means each shelf (5) captures images of the shelf (5) below (9) itself (figure 3). This requires an extra set of two cameras (6) to be imbued in the cabinet itself, per shelf (5) in the topmost level, in order to gather images from them. It also implies that the lowest level of shelves (5), sitting on the lowest part of the cabinet and directly imbued in it, do not need cameras (6) and only require the "H" shaped frame, load cells (14) and top cover (12).

In an embodiment, the cameras have a wide angle of view to the shelf (5) below, and the angles (10) of both cameras (6) do intersect with one another, making it so that there are no "dead" angles inside the cabinet, and everything can be seen clearly (figure 3).

In an embodiment, the peripheral controller (2) is the main controller of the cabinet, orchestrating operations between components and communicating with the cloud server (E) that controls all the cabinets.

In an embodiment, the cloud server (E) connects to a secure database (D) containing all the data regarding products and their characteristics, previous purchases and product replenished by staff and user interactions with products are stored. The cloud server also connects to a dense Al neural network (C) that acts as a redundancy used in case there is an issue identifying an object with the local Al / CV processing board (7) in each cabinet.

In an embodiment, the "Back office" front-end application (B) connects to the cloud server (E) and allows management of the cabinet by the owner and staff. Through it, changes can be made to stock, products and prices and it also allows visualisation of purchases done by customers as well as review of replenish sessions done by staff, all this in real time.

The mobile application also communicates with the cloud server (E) and through it allows control of one cabinet.

When the user has registered an account in the application and has a valid credit card associated with his account, it is possible to insert the cabinet code (4) (or scan it using the camera on the QR code). This operation sends a request to the cloud server (E) that identifies the cabinet by its code (4) and asks the peripheral controller (2) to run a batch of operations in case the cabinet is not in use, starting by checking if all the peripheral devices are ready and working correctly (weight sensor load cells (14) and cameras (6)), checking if the AI / CV board (7) is available for computation and finally verifying that the doors are closed.

If all conditions are met, the peripheral controller (2) unlocks the electromagnetic locks (1) as described above and the user can open the cabinet doors.

Once both doors are opened, the peripheral controller (2) locks them again, ensuring that if the doors are closed, they lock.

The peripheral controller is monitoring (or constantly pooling) all the weight sensor load cells (14) in the cabinet while the doors are open and if one presents a sudden change, the peripheral controller (2) starts gathering images from the cameras (6) that record the shelf (5) where the weight change happened and feed them to the AI / CV processing board (7) for analysis.

The Al / CV board (7) tries to assess the beginning moment for the user interaction and the end moment, when the shelf (5) is again still and without any movement. Once that is determined, it uses a series of algorithms to understand what happened in the interaction, which products were taken and which products were returned, if any. The result of this operation is then sent to the peripheral controller (2) which verifies it using another algorithm that takes said result and the weight change observed and validates it, both regarding the operation that happened and the possibility of product violation (in case a product is returned or removed with abnormal weight).

Assuming everything is properly verified, and no issues are found regarding the interaction, the products removed or returned from the shelf (5) are added to a virtual cart. This virtual cart is stored in the cloud server (E) by request of the peripheral controller (2).

The process is repeated for each interaction the user makes with the cabinet.

The purchase is ended when the user closes both doors. They instantly lock when closed, as the lock status was already set by the peripheral controller (2) when the doors were opened.

The closing of the doors triggers a request by the peripheral controller (2) to the cloud server (E), containing more information regarding the purchase session, along with images for validation and fraud detection algorithms to use.

The cloud server (E) uses the database (D) to check the prices of the products removed and then closes the customer's shopping session by saving it on the database (D) and sending a receipt to the mobile application. It also triggers a billing operation, deducting the total cost of the purchase on the customer's associated card.

The cabinet (F) is then ready for operation again, and the process can start over.

As the database (D) keeps registry of all operations both from customers and staff, it contains up to date, real time stock information, making it possible for the manager to check the product stock inside a cabinet (F) via the web Back office (B), as well as set a variety of alerts for when a product's stock goes below a certain level.

When replenishing, both the Back Office (B) and staff application provide the staff information regarding the amount of each product that is missing. This allows for quick and efficient replenishing as the staff does not need to carry more products than those necessary nor do they need to inspect the cabinet and count the missing products before replenishing.

### Example 2 - Method of acquisition by using model 1

In an embodiment, the acquisition of goods using this system can be divided in 3 stages, and has only one precondition, which is to have the mobile application that allows access to the cabinets installed and configured on a mobile phone.

In an embodiment, the cabinet described below is an equipment in the physical world. It is unlocked for purchasing goods through a mobile application but interaction with the cabinet requires physical access to it. Product selection by the user is done manually and directly, by picking the products up by hand.

In an embodiment, the configuration of the mobile application can be performed by the following
Once the user downloads and installs the mobile application on a mobile phone through any of the regular means, the application can be opened, and the user should register an account. To do so, the user is prompted to insert a phone number with which the account should be associated with.
The number inserted receives a text message containing a 6-digit code within seconds of inserting it in the application. This 6-digit code, once inserted into the application, it allows the user access to a new interface, where several screens are available: a home screen of the application, a screen for interaction with the cabinet, a screen for purchase receipts and one for account configuration.
On the account configuration screen, the user is able to add the user's name, email and a VAT Number. On a separate tab in the account configuration screen, the user should then add a valid credit or debit card by clicking on a plus symbol on the bottom right corner. This opens a new interface in which the card information can be inserted and once submitted it is validated and saved. The user is now able to interact with a cabinet.

An embodiment for Opening a cabinet
As the user now has a valid card associated with the application, it is possible to interact with a cabinet. To do so, the user firstly goes near a cabinet and looks for the machine's code (1) placed, for example, on the top right of the equipment, in a sticker.
The user then with the mobile application opened selects the Cabinet control screen, which asks for a code, for example a 4-digit code, to be inserted in order to identify the cabinet the user wants to unlock.
The user then inserts the code in the input and an "Open" button becomes available below.
Pressing the "Open" button triggers a series of verifications to check if it is possible to open the cabinet and if it is not open already. If everything is ok, the cabinet doors unlock, producing a sound emitted by the electromagnetic locker. The user should grab each door's handle and open the doors.

An embodiment of Picking products:
With the cabinet doors open, the user has now access to all the products inside the cabinet. These should be manipulated normally, like when interacting with products in a supermarket shelf: the user can pick up any product and inspect it for as long as he wishes to do so. The system knows what was removed and has a virtual cart that stored all the products that are currently in the user's hand.
If the user returns one of the products taken from the cabinet to any of the shelves (5), the product is also removed from the virtual cart.
Once the user is satisfied with his selection, the user can move on to the next step.

An embodiment of ending a purchase:
To finish a purchase, the user only needs to close both doors. Once the doors are closed, they are secured and do not open again. When this happens, the system moves on to processing the purchase: the user's mobile application shows a message indicating that his purchase cart is being processed and after a couple seconds a list of products removed by the user appears on the mobile application's screen.
When the receipt is sent to the user's mobile application, the system also proceeds with the billing of the total amount of the purchase. It charges this amount on the card that the user had previously associated with their account (step A).
The user should review the receipt and in case any problems are present, there is a small question mark button on the top right corner of the receipt which the user can press to submit an assistance request to the management team, regarding any step of the purchase.

### Example 3 - Description of Model 2

This example describes a cabinet model equipped with a POS (Point of Sale) Terminal, with contactless payment capabilities.

This model is identical to model 1 with the addition of a POS terminal on the cabinet's frame on the front side. The POS terminal connects to the cabinet's wireless (or Wi-Fi) network (A) and through it connects to the cloud server (E), through which it validates a user's card and process payments.

### Example 4 - Method of acquisition by using model 2

This example describes the customer's use case of the invention, similar to Example 2, with an optional POS (Point of Sale Terminal) with contactless payment method. This makes it so the only precondition is for the customer to have a credit or debit card.

An embodiment for opening a cabinet
The user should first get close to the cabinet and localize the POS terminal.
The POS terminal shows a message asking the customer to either insert the credit/debit card on the proper card slot, or to tap the POS with the card, if the latter has contactless capabilities.
The POS communicates with the cloud server (E) and if the card is valid and able to make payments, it triggers a series of verifications to check if it is possible to open the cabinet or if it is not open already. If everything is ok, the cabinet unlocks the doors, producing a sound emitted by the electromagnetic locker. The user, then, can grab each door's handle to open the doors.

An embodiment for Picking products:
With the cabinet doors open, the user has now access to all the products inside the cabinet. These should be manipulated normally, like when interacting with products in a supermarket shelf: the user can pick up any product and inspect it for as long as he wishes to do so. The system knows what was removed and has a virtual cart that stored all the products that are currently in the user's hand.
If the user returns one of the products he took from the cabinet to any of the shelves (5), the product is also removed from the virtual cart.
Once the user is satisfied with his selection, he can move on to the next step.

An embodiment for ending a purchase:
To finish a purchase, the user only needs to close both doors. Once the doors are closed, they are secured and do not open again. When this happens, the system moves on to processing the purchase.
Within a few seconds, when the purchase has finished processing, the system proceeds with the billing of the total amount of the purchase. It charges this amount on the card that the user has opened the cabinet with.

### Example 5: Cabinet item replenishment by using model 2

This example refers to cabinet item replenishment by the cabinet management staff.

The only requirement is to have the staff version of the application installed on a mobile device.

The cabinet owners can, through the Back Office web application, control the users in their organisation and add staff members with different permissions.

These staff members have, if the permissions are given, the ability to open the cabinet for a replenishment session, as well as the ability to view real time stock.

An embodiment for Preparing the replenishment
The staff member firstly, without the need to be physically near the cabinet, opens the mobile staff application.
On the mobile staff application, there is an option to check the cabinet stock. By clicking it, the staff member should take note of the column that indicates the "picking" amount. This column indicates the amount of products that are missing for each product there is in the cabinet , making it so that when getting them for replenishment only the required products are brought and none will be missing.

An embodiment for replenishing
Once the staff member is near the cabinet, they are able to open the cabinet with the mobile staff application by pressing the "Replenish" option. They are prompted with a confirmation pop-up warning that this operation is temporarily disabling the cabinet and refusing customer use, as well as unlock the doors.
The staff member then opens both doors and starts the replenishment process.
To replenish the cabinet, one needs only to place the products on their proper shelves (5) and rows.
Once all the products are in their place and the staff member is satisfied with the state of the cabinet, both doors are closed.

### An embodiment for finishing the process

Once both doors are shut, the staff member are prompted with a pop-up asking them to review the replenish session. Clicking this button shows the staff member a table containing the current cabinet stock with a "+" and a "-" symbol next to each product. These buttons allow adjustment of the current product stocks in the cabinet in case something went wrong in the replenishment and has to be manually adjusted. On the end of this screen there is a confirmation button. Clicking it enables the cabinet for customer operation once again and confirm the new stock values.

The term "comprising" whenever used in this document is intended to indicate the presence of stated features, integers, steps, components, but not to preclude the presence or addition of one or more other features, integers, steps, components, or groups thereof.

The disclosure should not be seen in any way restricted to the embodiments described and a person with ordinary skill in the art will foresee many possibilities to modifications thereof. The above-described embodiments are combinable.

The following claims further set out particular embodiments of the disclosure.

## Claims

1. Storage cabinet comprising one or more shelves, one or more doors for closing the cabinet, and an electromagnetic lock for locking the door or doors;
wherein each of said shelves comprises one or more cameras, an opened or closed door state sensor, and a weight sensor arranged to measure weight of products placed on each of said one or more shelves;
further comprising a cabinet electronic data processor configured for carrying out a machine learning computer vision method for processing data received from cameras and sensors to identify products removed from said one or more shelves, wherein the cabinet electronic data processor is further configured for:
when detecting the cabinet door or doors being in an open state, acquiring image data from the camera or cameras and weight sensor data;
when detecting a weight change at a shelf, processing image data acquired including when the weight change occurred, with said machine learning computer vision method;
wherein the cabinet electronic data processor is further configured for receiving, as preceding steps, a valid user authorisation and unlocking the electromagnetic lock; and refusing subsequent user authorisations until a previous user has closed the door or doors;
wherein the machine learning computer vision method comprises a Convolutional Neural Network, CNN;
wherein cabinet electronic data processor is connected to a remote server, configured for carrying out a machine learning computer vision method for processing image data as a redundant processing to that of the cabinet electronic data processor;
wherein the cabinet electronic data processor is further configured for sending a list of products identified as removed from said one or more shelves between receiving a valid user authorisation and receiving door state sensor data indicating the door or doors as closed;
wherein the cabinet electronic data processor is further configured for comparing weight data before a product is removed from a shelf, with weight data and after a product is returned to a shelf, and triggering an action should a weight difference exceeding a predetermined threshold is detected;
wherein the cabinet electronic data processor is further configured for carrying out a machine learning computer vision method for processing data received from cameras comprising a first machine learning computer vision model trained for classifying a product handling event as a product pickup or product return and a second machine learning computer vision model trained for identifying the product being handled in said product handling event, after the first machine learning computer vision model classification.

2. Storage cabinet according to the previous claim wherein the cabinet electronic data processor is further configured for, after unlocking the electromagnetic lock, when detecting cabinet door or doors being in an open state, locking the electromagnetic lock such that when the door or doors are closed, the door or doors will be locked.

3. Storage cabinet according to any of the previous claims comprising a peripheral controller configured for receiving data from the camera or cameras, the weight sensor and from the shelf data processor or processors, and configured for controlling the electromagnetic locker.

4. Storage cabinet according to any of the previous claims wherein the cabinet electronic data processor comprises a wireless connection for communicating with the shelf data processor or processors; and/or wherein the cabinet electronic data processor comprises a wireless connection for communicating with a user's mobile device.

5. Storage cabinet according to any of the previous claims wherein each of said shelves comprises a shelf electronic data processor connected to the electromagnetic locker, the one or more cameras and the weight sensor, and comprising a wireless connection;
wherein the shelves are movable within the cabinet, in particular vertically movable.

6. Storage cabinet according to any of the previous claims, being an autonomous cabinet for use in cashier-less purchases.

7. Storage cabinet according to any of the previous claims further comprising a visual identification code attached to the exterior of the cabinet for scanning by a user's mobile device; preferably wherein the visual identification code is a 1D bar code or 2D bar code, in particular a QR code; and/or a radio-frequency identification, RFID, tag attached to the exterior of the cabinet for scanning by a user's mobile device, in particular the RFID tag being a near field communication, NFC, tag.

8. Storage cabinet according to any of the previous claims wherein each of the shelf or shelves comprises a hollow interior defined by a top cover and a bottom part.

9. Storage cabinet according to the previous claim wherein the top cover of the shelf is supported solely by a weight sensor arranged on the bottom part of the shelf, for measuring the weight of products placed on top of the shelf, in particular the weight sensor comprising two or more load cells.

10. Storage cabinet according to any of the previous claims wherein the bottom part of the shelf comprises at least one downward-looking camera arranged on the underside of the shelf.

11. Storage cabinet according to any of the previous claims wherein a bottom part of the shelf has a "U" cross-sectional profile defining side surfaces of the bottom part; preferably wherein a top cover of the shelf is a flat surface configured to move vertically without touching the sides of the bottom part of the shelf.

12. Storage cabinet according to any of the previous claims wherein the camera or cameras are fixed to an underside of each shelf, arranged on a front edge of said shelf, and directed towards another shelf immediately below, in particular the camera being arranged on the centre of each shelf front edge or the cameras being distributed along each shelf front edge, further in particular the cameras being distributed along each shelf front edge and in a central region of the shelf front edge; preferably wherein the camera or cameras are wide angle lensed cameras.

13. Method for operating a storage cabinet of any of the previous claims comprising one or more shelves, one or more doors for closing the cabinet, and an electromagnetic lock for locking the door or doors;
wherein each of said shelves comprises one or more cameras, an opened or closed door state sensor, and a weight sensor arranged to measure weight of products placed on each of said one or more shelves;
further comprising a cabinet electronic data processor configured for carrying out a machine learning computer vision method for processing data received from cameras and sensors to identify products removed from said one or more shelves, wherein the method comprises using said cabinet electronic data processor for:
receiving a valid user authorisation and unlocking the electromagnetic lock;
when detecting the cabinet door or doors being in an open state, acquiring image data from the camera or cameras and weight sensor data;
when detecting a weight change at a shelf, processing image data acquired including when the weight change occurred, with said machine learning computer vision method;
comparing weight data before a product is removed from a shelf, with weight data and after a product is returned to a shelf, and triggering an action should a weight difference exceeding a predetermined threshold is detected;
sending a list of products identified as removed from said one or more shelves between receiving a valid user authorisation and receiving door state sensor data indicating the door or doors as closed;
refusing subsequent user authorisations until a previous user has closed the door or doors;
wherein the machine learning computer vision method comprises a Convolutional Neural Network, CNN;
wherein cabinet electronic data processor is connected to a remote server, configured for carrying out a machine learning computer vision method for processing image data as a redundant processing to that of the cabinet electronic data processor;
wherein the cabinet electronic data processor is further configured for carrying out a machine learning computer vision method for processing data received from cameras comprising a first machine learning computer vision model trained for classifying a product handling event as a product pickup or product return and a second machine learning computer vision model trained for identifying the product being handled in said product handling event, after the first machine learning computer vision model classification.

14. Method according to the previous claim comprising the cabinet electronic data processor, after unlocking the electromagnetic lock, when detecting cabinet door or doors being in an open state, locking the electromagnetic lock such that when the door or doors are closed, the door or doors will be locked.

## Patentansprüche

1. Lagerschrank umfassend einen oder mehrere Einlegeböden, eine oder mehrere Türen zum Verschließen des Schranks und ein elektromagnetisches Schloss zum Verriegeln der Tür oder der Türen;
wobei jeder der genannten Einlegeböden eine oder mehrere Kameras, einen Sensor zum Erfassen des Zustands der Tür (offen oder geschlossen) und einen Gewichtssensor umfasst, der so angeordnet ist, dass er das Gewicht der auf jedem der genannten einen oder mehreren Einlegeböden abgelegten Produkte misst;
ferner umfassend einen elektronischen Datenprozessor für den Schrank, der so konfiguriert ist, dass er ein Computer-Vision-Verfahren mit maschinellem Lernprozess durchführt, um Daten zu verarbeiten, die von Kameras und Sensoren empfangen werden, um Produkte zu identifizieren, die von dem genannten einen oder mehreren Einlegeböden entnommen werden, wobei der elektronische Datenprozessor des Schranks ferner so konfiguriert ist, dass er
beim Erkennen einer oder mehrerer geöffneter Schranktüren die Bilddaten der Kamera oder Kameras und die Daten des Gewichtssensors erfasst;
beim Erkennen einer Gewichtsveränderung an einem Einlegeboden erfasste Bilddaten einschließlich eingetretener Gewichtsveränderung mit dem genannten Computer-Vision-Verfahren mit maschinellem Lernprozess verarbeitet;
wobei der elektronische Datenprozessor des Schranks ferner so konfiguriert ist, dass er als vorhergehende Schritte eine gültige Benutzerautorisierung empfängt und das elektromagnetische Schloss entriegelt; und nachfolgende Benutzerautorisierungen verweigert, bis ein vorheriger Benutzer die Tür oder Türen geschlossen hat;
wobei das Computer-Vision-Verfahren mit maschinellem Lernprozess ein Convolutional Neural Network (CNN) umfasst;
wobei der elektronische Datenprozessor des Schranks mit einem Remote-Server verbunden ist, der so konfiguriert ist, dass er ein Computer-Vision-Verfahren mit maschinellem Lernprozess zur Bilddatenverarbeitung als redundante Verarbeitung zu der des elektronischen Datenprozessors des Schranks ausführt;
wobei der elektronische Datenprozessor des Schranks ferner so konfiguriert ist, dass er zwischen dem Empfang einer gültigen Benutzerautorisierung und dem Empfang von Zustandsdaten des Türsensors, ob die Tür oder die Türen geschlossen sind, eine Liste von Produkten sendet, die als von dem genannten einen oder den genannten mehreren Einlegeböden als entnommen identifiziert wurden;
wobei der elektronische Datenprozessor des Schranks ferner so konfiguriert ist, dass er die Gewichtsdaten vor der Entnahme eines Produkts von einem Einlegeboden mit den Gewichtsdaten nach dem Zurücklegen eines Produkts auf einem Einlegeboden vergleicht und eine Aktion auslöst, wenn ein Gewichtsunterschied festgestellt wird, der einen vorgegebenen Grenzwert überschreitet;
wobei der elektronische Datenprozessor des Schranks ferner so konfiguriert ist, dass er ein Computer-Vision-Verfahren mit maschinellem Lernprozess ausführt, um die von den Kameras empfangenen Daten zu verarbeiten, umfassend ein erstes Computer-Vision-Verfahren mit maschinellem Lernprozess, das darauf trainiert ist, einen Produktvorgang als Produktentnahme oder Produktrückgabe zu klassifizieren, und ein zweites Computer-Vision-Verfahren mit maschinellem Lernprozess, das darauf trainiert ist, das von dem genannten Produktvorgang betroffene Produkt nach der Klassifizierung durch das erste Computer-Vision-Verfahren mit maschinellem Lernprozess zu identifizieren.

2. Lagerschrank nach dem vorangehenden Anspruch, wobei der elektronische Datenprozessor des Schranks ferner so konfiguriert ist, dass er nach dem Entriegeln des elektromagnetischen Schlosses, wenn er feststellt, dass die Schranktür oder die Schranktüren geöffnet sind, das elektromagnetische Schloss so verriegelt, dass die Tür oder die Türen verriegelt werden, wenn die Tür oder die Türen geschlossen werden.

3. Lagerschrank nach einem der vorangehenden Ansprüche umfassend eine periphere Steuereinheit, die so konfiguriert ist, dass sie Daten von der Kamera oder den Kameras, dem Gewichtssensor und von dem Datenprozessor oder den Datenprozessoren des Einlegebodens empfängt, und die so konfiguriert ist, dass sie das elektromagnetische Schloss steuert.

4. Lagerschrank nach einem der vorangehenden Ansprüche, wobei der elektronische Datenprozessor des Schranks eine drahtlose Verbindung zur Kommunikation mit dem Datenprozessor oder den Datenprozessoren des Einlegebodens umfasst; und/oder wobei der elektronische Datenprozessor des Schranks eine drahtlose Verbindung zur Kommunikation mit dem Mobilgerät eines Benutzers umfasst.

5. Lagerschrank nach einem der vorangehenden Ansprüche, wobei jeder der genannten Einlegeböden einen elektronischen Datenprozessor des Einlegebodens umfasst, der mit dem elektromagnetischen Schloss, der einen oder mehreren Kameras und dem Gewichtssensor verbunden ist und eine drahtlose Verbindung umfasst;
wobei die Einlegeböden innerhalb des Schrankes beweglich sind, insbesondere vertikal beweglich.

6. Lagerschrank nach einem der vorangehenden Ansprüche, wobei es sich um einen autonomen Schrank zur Verwendung bei kassiererlosen Einkäufen handelt.

7. Lagerschrank nach einem der vorangehenden Ansprüche, ferner umfassend einen visuellen Identifizierungscode, der an der Außenseite des Schranks zum Scannen durch ein mobiles Gerät eines Benutzers angebracht ist; wobei der visuelle Identifizierungscode bevorzugt ein 1D-Strichcode oder ein 2D-Strichcode, insbesondere ein QR-Code ist; und/oder ein RFID-Tag (Radio Frequency Identification), der an der Außenseite des Schranks zum Scannen durch ein mobiles Gerät eines Benutzers angebracht ist, wobei der RFID-Tag insbesondere ein NFC-Tag (Near Field Communication) ist.

8. Lagerschrank nach einem der vorangehenden Ansprüche, wobei jeder der Einlegeböden einen inneren Hohlraum aufweist, der durch eine obere Abdeckung und einen unteren Teil definiert ist.

9. Lagerschrank nach dem vorangehenden Anspruch, wobei die obere Abdeckung des Einlegebodens nur von einem Gewichtssensor getragen wird, der auf dem unteren Teil des Einlegebodens angeordnet ist, um das Gewicht der auf dem Einlegeboden platzierten Produkte zu messen, wobei der Gewichtssensor insbesondere zwei oder mehr Wägezellen umfasst.

10. Lagerschrank nach einem der vorangehenden Ansprüche, wobei der untere Teil des Einlegebodens mindestens eine nach unten gerichtete Kamera aufweist, die an der Unterseite des Einlegebodens angeordnet ist.

11. Lagerschrank nach einem der vorangehenden Ansprüche, wobei ein unterer Teil des Einlegebodens ein U-förmiges Querschnittsprofil aufweist, das die Seitenflächen des unteren Teils definiert; wobei eine obere Abdeckung des Einlegebodens bevorzugt eine flache Oberfläche ist, die so konfiguriert ist, dass sie sich vertikal bewegt, ohne die Seiten des unteren Teils des Einlegebodens zu berühren.

12. Lagerschrank nach einem der vorangehenden Ansprüche, wobei die Kamera oder die Kameras an der Unterseite jedes Einlegebodens befestigt und an einer vorderen Kante des genannten Einlegebodens angeordnet und auf einen unmittelbar darunter befindlichen anderen Einlegeboden gerichtet sind, wobei die Kamera insbesondere in der Mitte jeder vorderen Kante des Einlegebodens angeordnet ist oder die Kameras entlang jeder vorderen Kante des Einlegebodens verteilt sind, wobei ferner insbesondere die Kameras entlang jeder vorderen Kante des Einlegebodens und in einem mittleren Bereich der vorderen Kante des Einlegebodens verteilt sind; wobei die Kamera oder die Kameras bevorzugt Kameras mit einem Weitwinkelobjektiv sind.

13. Verfahren für den Betrieb eines Lagerschranks nach einem der vorangehenden Ansprüche umfassend einen oder mehrere Einlegeböden, eine oder mehrere Türen zum Verschließen des Schranks und ein elektromagnetisches Schloss zum Verriegeln der Tür oder der Türen;
wobei jeder der genannten Einlegeböden eine oder mehrere Kameras, einen Sensor zum Erfassen des Zustands der Tür (offen oder geschlossen) und einen Gewichtssensor umfasst, der so angeordnet ist, dass er das Gewicht der Produkte misst, die auf jedem der einen oder mehreren Einlegeböden abgelegt werden;
ferner umfassend einen elektronischen Datenprozessor für den Schrank, der so konfiguriert ist, dass er ein Computer-Vision-Verfahren mit maschinellem Lernprozess durchführt, um Daten zu verarbeiten, die von Kameras und Sensoren empfangen werden, um Produkte zu identifizieren, die von dem genannten einen oder mehreren Einlegeböden entnommen werden, wobei das Verfahren die Verwendung des genannten elektronischen Datenprozessor für den Schrank umfasst, um:
eine gültigen Benutzerautorisierung zu empfangen und um das elektromagnetische Schloss zu entriegeln;
beim Erkennen einer oder mehrerer geöffneter Schranktüren die Bilddaten der Kamera oder Kameras und die Daten des Gewichtssensors zu erfassen;
beim Erkennen einer Gewichtsveränderung an einem Einlegeboden erfasste Bilddaten einschließlich eingetretener Gewichtsveränderung mit dem genannten Computer-Vision-Verfahren mit maschinellem Lernprozess zu verarbeiten;
Gewichtsdaten vor der Entnahme eines Produkts von einem Einlegeboden mit Gewichtsdaten nach dem Zurücklegen eines Produkts auf einen Einlegeboden zu vergleichen und eine Aktion auszulösen, wenn ein Gewichtsunterschied festgestellt wird, der einen vorgegebenen Grenzwert überschreitet;
eine Liste von Produkten zu senden, die zwischen dem Empfang einer gültigen Benutzerautorisierung und dem Empfang von Zustandsdaten des Türsensors, die die Tür oder die Türen als geschlossen anzeigen, als von dem genannten einen oder den mehreren Einlegeböden als entfernt identifiziert wurden;
die Berechtigung nachfolgender Benutzer zu verweigern, bis ein vorheriger Benutzer die Tür oder die Türen geschlossen hat;
wobei das Computer-Vision-Verfahren mit maschinellem Lernprozess ein Convolutional Neural Network (CNN) umfasst;
wobei der elektronische Datenprozessor des Schranks mit einem Remote-Server verbunden ist, der so konfiguriert ist, dass er ein Computer-Vision-Verfahren mit maschinellem Lernprozess zur Bilddatenverarbeitung als redundante Verarbeitung zu der des elektronischen Datenprozessors des Schranks ausführt;
wobei der elektronische Datenprozessor des Schranks ferner so konfiguriert ist, dass er ein Computer-Vision-Verfahren mit maschinellem Lernprozess ausführt, um die von den Kameras empfangenen Daten zu verarbeiten, umfassend ein erstes Computer-Vision-Verfahren mit maschinellem Lernprozess, das darauf trainiert ist, einen Produktvorgang als Produktentnahme oder Produktrückgabe zu klassifizieren, und ein zweites Computer-Vision-Verfahren mit maschinellem Lernprozess, das darauf trainiert ist, das von dem genannten Produktvorgang betroffene Produkt nach der Klassifizierung durch das erste Computer-Vision-Verfahren mit maschinellem Lernprozess zu identifizieren.

14. Verfahren nach dem vorangehenden Anspruch umfassend den elektronischen Datenprozessor des Schranks, der nach dem Entriegeln des elektromagnetischen Schlosses, wenn er feststellt, dass die Schranktür oder Schranktüren geöffnet sind, das elektromagnetische Schloss so verriegelt, dass die Tür oder die Türen verriegelt werden, wenn die Tür oder die Türen geschlossen werden.

## Revendications

1. Armoire de stockage comprenant une ou plusieurs étagères, une ou plusieurs portes pour fermer l'armoire, et un verrou électromagnétique pour verrouiller la porte ou les portes ;
dans laquelle chacune desdites étagères comprend une ou plusieurs caméras, un capteur de position de porte ouverte ou fermée, et un capteur de poids arrangé pour mesurer le poids des produits placés sur ladite ou sur chacune desdites étagères ;
comprenant également un traiteur de données électronique d'armoire configuré pour exécuter un procédé de vision par ordinateur d'apprentissage automatique pour traiter les données reçues à partir des caméras et capteurs pour identifier les produits retirés de ladite ou desdites étagères, dans lequel le traiteur de données électronique de l'armoire est également configuré pour :
lorsque la ou les portes d'armoire sont détectées comme étant ouvertes, obtenir des données d'image à partir de la caméra ou des caméras et des données de capteur de poids ;
lorsqu'un changement de poids est détecté sur une étagère, traiter les données d'image acquises y compris lorsque le changement de poids a eu lieu, à travers ledit procédé de vision par ordinateur d'apprentissage automatique ;
dans laquelle le traiteur de données électroniques de l'armoire est également configuré pour recevoir, à titre d'étapes précédentes, une autorisation d'utilisateur valide et déverrouiller le verrou électromagnétique ; et refuser les autorisations d'utilisateur subséquentes jusqu'à ce qu'un utilisateur précédent ait fermé la porte ou les portes ;
dans laquelle le procédé de vision par ordinateur d'apprentissage automatique comprend un Réseau Neuronal Convolutif, CNN ;
dans laquelle le traiteur de données électronique de l'armoire est connecté à un serveur à distance, configuré pour exécuter un procédé de vision par ordinateur d'apprentissage automatique pour traiter des données d'image à titre de traitement redondant par rapport à celui du traiteur de données électronique de l'armoire ;
dans laquelle le traiteur de données électronique de l'armoire est également configuré pour envoyer une liste de produits identifiés comme ayant été retirés de ladite ou desdites étagères entre recevoir une autorisation d'utilisateur valide et recevoir des données de capteur de position de porte indiquant que la porte ou les portes sont fermées ;
dans laquelle le traiteur de données électronique de l'armoire est également configuré pour comparer les données de poids avant qu'un produit soit retiré d'une étagère, avec des données de poids et après qu'un produit soit remis sur une étagère, et déclencher une action si une différence de poids excédant un seuil prédéterminé est détectée ;
dans laquelle le traiteur de données électronique de l'armoire est également configuré pour exécuter un procédé de vision par ordinateur d'apprentissage automatique pour traiter des données reçues à partir de caméras comprenant un premier modèle de vision par ordinateur d'apprentissage automatique entrainé pour classer un évènement de manipulation de produit tel que le retrait d'un produit ou la remise en place d'un produit et un second modèle de vision par ordinateur d'apprentissage automatique entrainé pour identifier le produit ayant été manipulé lors dudit évènement de manipulation de produit, après la première classification de modèle de vision par ordinateur d'apprentissage automatique.

2. Armoire de stockage selon la revendication précédente dans laquelle le traiteur de données électronique est également configuré pour, après avoir déverrouillé le verrou électromagnétique, lorsqu'une porte ou des portes sont détectées comme étant ouvertes, verrouiller le verrou électromagnétique tel que lorsque la porte ou les portes sont fermées, la porte ou les portes soient verrouillées.

3. Armoire de stockage selon l'une quelconque des revendications précédentes comprenant un contrôleur périphérique configuré pour recevoir des données à partir de la caméra ou des caméras, du capteur de poids et à partir du traiteur ou des traiteurs de données de l'étagère, et configuré pour contrôler le verrou électromagnétique.

4. Armoire de stockage selon l'une quelconque des revendications précédentes dans laquelle le traiteur de données électronique de l'armoire comprend une connexion sans fils pour communiquer avec le traiteur ou les traiteurs de données de l'étagère ; et/ou dans laquelle le traiteur de données électronique de l'armoire comprend une connexion sans fils pour communiquer avec un dispositif mobile d'utilisateur.

5. Armoire de stockage selon l'une quelconque des revendications précédentes dans laquelle chacune desdites étagères comprend un traiteur de données électronique d'étagère connecté au verrou électromagnétique, à la ou aux caméras et au capteur de poids, et comprenant une connexion sans fils ;
dans laquelle les étagères sont déplaçables à l'intérieur de l'armoire, en particulier verticalement déplaçables.

6. Armoire de stockage selon l'une quelconque des revendications précédentes, étant une armoire autonome destinée à être utilisée pour des achats sans caissier.

7. Armoire de stockage selon l'une quelconque des revendications précédentes comprenant également un code d'identification visuelle attaché à l'extérieur de l'armoire destiné à être scanné par le dispositif mobile d'un utilisateur ; préférablement dans laquelle le code d'identification visuelle est un code-barres 1D ou un code-barres 2D, en particulier un QR code ; et/ou une étiquette d'identification par radiofréquence, RFID, attachée à l'extérieur de l'armoire destinée à être scannée par le dispositif mobile d'un utilisateur, l'étiquette RFID étant en particulier une étiquette de communication en champ proche, NFC.

8. Armoire de stockage selon l'une quelconque des revendications précédentes dans laquelle chaque étagère ou chacune des étagères comprend un intérieur creux défini par un couvercle supérieur et une partie inférieure.

9. Armoire de stockage selon la revendication précédente dans laquelle le couvercle supérieur de l'étagère est uniquement soutenu par un capteur de poids arrangé sur la partie inférieure de l'étagère, pour mesurer le poids des produits placés sur l'étagère, le capteur de poids comprenant en particulier deux ou plus de cellules de pesage.

10. Armoire de stockage selon l'une quelconque des revendications précédentes dans laquelle la partie inférieure de l'étagère comprend au moins une caméra pointée vers le bas arrangée sur le dessous de l'étagère.

11. Armoire de stockage selon l'une quelconque des revendications précédentes dans laquelle une partie inférieure de l'étagère a un profil transversal en forme de « U » définissant des surfaces latérales de la partie inférieure ; préférablement dans laquelle un couvercle supérieur de l'étagère est une surface plate configurée pour se déplacer verticalement sans toucher les latérales de la partie inférieure de l'étagère.

12. Armoire de stockage selon l'une quelconque des revendications précédentes dans laquelle la caméra ou les caméras sont fixées à un dessous de chaque étagère, arrangées sur un rebord avant de ladite étagère, et dirigées vers une autre étagère immédiatement en dessous, la caméra étant en particulier arrangée au centre du rebord avant de chaque étagère ou les caméras étant distribuées le long de chaque rebord avant d'étagère, les caméras étant plus particulièrement distribuées le long de chaque rebord avant d'étagère et dans une zone centrale du rebord avant de l'étagère ; préférablement dans laquelle la caméra ou les caméras sont des caméras à objectif grand angle.

13. Procédé pour opérer une armoire de stockage de l'une quelconque des revendications précédentes comprenant une ou plusieurs étagères, une ou plusieurs portes pour fermer l'armoire, et un verrou électromagnétique pour verrouiller la porte ou les portes ;
dans lequel chacune desdites étagères comprend une ou plusieurs caméras, un capteur de position de porte ouverte ou fermée, et un capteur de poids arrangé pour mesurer le poids des produits placés sur ladite ou sur chacune desdites étagères ;
comprenant également un traiteur de données électronique d'armoire configuré pour exécuter un procédé de vision par ordinateur d'apprentissage automatique pour traiter les données reçues à partir des caméras et capteurs pour identifier les produits retirés de ladite ou desdites étagères, dans lequel le procédé comprend utiliser ledit traiteur de données électronique d'armoire pour :
recevoir une autorisation d'utilisateur valide et déverrouiller le verrou électromagnétique;
lorsque la ou les portes d'armoire sont détectées comme étant ouvertes, obtenir des données d'image à partir de la caméra ou des caméras et des données de capteur de poids ;
lorsqu'un changement de poids est détecté sur une étagère, traiter les données d'image acquises y compris lorsque le changement de poids a eu lieu, à travers ledit procédé de vision par ordinateur d'apprentissage automatique ;
comparer les données de poids avant qu'un produit soit retiré d'une étagère, avec des données de poids et après qu'un produit soit remis sur une étagère, et déclencher une action si une différence de poids excédant un seuil prédéterminé est détectée ;
envoyer une liste de produits identifiés comme ayant été retirés de ladite ou desdites étagères entre recevoir une autorisation d'utilisateur valide et recevoir des données de capteur de position de porte indiquant que la porte ou les portes sont fermées ;
refuser les autorisations d'utilisateur subséquentes jusqu'à ce qu'un utilisateur précédent ait fermé la porte ou les portes ;
dans lequel le procédé de vision par ordinateur d'apprentissage automatique comprend un Réseau Neuronal Convolutif, CNN ;
dans lequel le traiteur de données électronique de l'armoire est connecté à un serveur à distance, configuré pour exécuter un procédé de vision par ordinateur d'apprentissage automatique pour traiter des données d'image à titre de traitement redondant par rapport à celui du traiteur de données électronique de l'armoire ;
dans lequel le traiteur de données électronique de l'armoire est également configuré pour exécuter un procédé de vision par ordinateur d'apprentissage automatique pour traiter des données reçues à partir de caméras comprenant un premier modèle de vision par ordinateur d'apprentissage automatique entrainé pour classer un évènement de manipulation de produit tel que le retrait d'un produit ou la remise en place d'un produit et un second modèle de vision par ordinateur d'apprentissage automatique entrainé pour identifier le produit ayant été manipulé lors dudit évènement de manipulation de produit, après la première classification de modèle de vision par ordinateur d'apprentissage automatique.

14. Procédé selon la revendication précédente comprenant, après avoir déverrouillé le verrou électromagnétique, lorsqu'une porte ou des portes sont détectées comme étant ouvertes, que le traiteur de données électronique de l'armoire verrouille le verrou électromagnétique tel que lorsque la porte ou les portes sont fermées, la porte ou les portes soient verrouillées.
